# EUROPEAN PATENT APPLICATION

(11) **EP 1 607 873 A1**
(43) Date of publication of application: **21.12.2005**
(21) Application number: 04717279.6
(22) Date of filing: 04.03.2004
(51) Int. Cl.: G06F 13/00, G06F 15/00, H04L 29/02

(54) **MANAGEMENT METHOD FOR NETWORK CONNECTION AND ELECTRONIC APPARATUS**

(30) Priority: 26.03.2003 JP 2003084246
(71) Applicant: SONY CORPORATION, Tokyo 141-0001 (JP)
(72) Inventor: KOJO, Tomomasa, Sony Corporation, Tokyo 141-0001 (JP); HASHI, Hiroki, Sony Corporation, Tokyo 141-0001 (JP)
(74) Representative: Nicholls, Michael John
(86) International application number: PCT/JP2004/002733
(87) International publication number: WO 2004/086238

(57) **Abstract**

The present invention is relative to a method for management for connection to a network of an electronic apparatus having a networking function in which, when a malfunction has occurred in a connection to the network, a malfunction attributable to the own apparatus and a malfunction attributable to the external apparatus other than the own apparatus may be separated from each other for convenience in giving a judgment. An access controller (12) is provided to an electronic apparatus (10) for detecting the connection or non-connection of the apparatus to a LAN cable (22). When running an application, a micro-computer (13), provided to the electronic apparatus, checks a detection output of the access controller to make a check as to whether or not there is any malfunction pertinent to the network connection in the LAN cable and in the own apparatus. If, as a result of this check, there is no abnormal state, the application is executed. When the application uses the network, it is checked, by the access controller, whether or not the linkage to the network is normal. If, as a result of the check, the linkage to the network is normal, accessing of the application to the network is executed.

## Description

### Technical Field

This invention relates to a management method for network connection in which, when a malfunction has occurred in an electronic apparatus having a network function, as to connection thereof to the network, the location of such malfunction can be identified.

The present invention contains subject matter related to Japanese Patent Application JP 2003-84246, filed in the Japanese Patent Office on March 26, 2003, the entire contents of which being incorporated herein by reference.

### Background Art

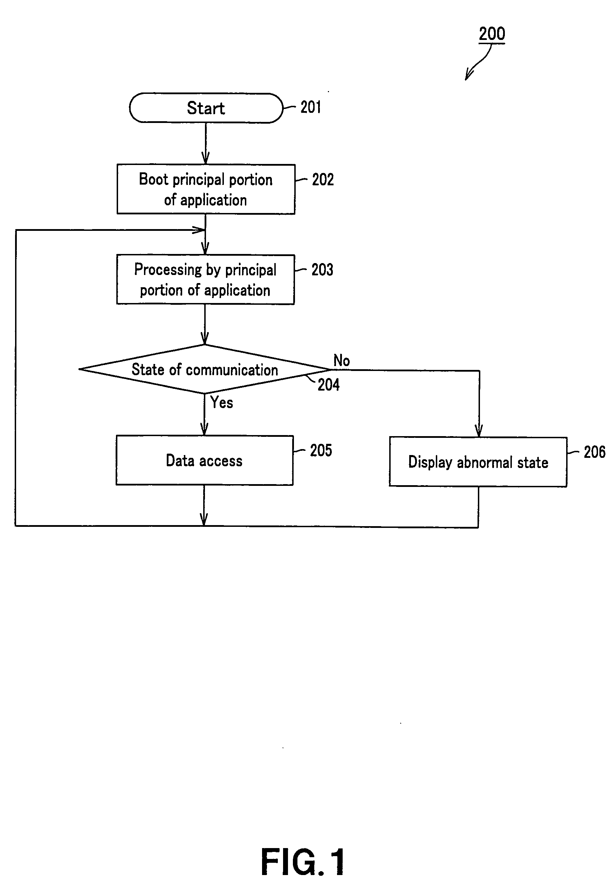

The opportunities for electronic apparatus, such as personal computers or AV (audio visual) apparatus, to exchange data of variable sorts, over a network, are increasing. Thus, when exchanging data over the network, the electronic apparatus, having the networking function, check the status of the network in accordance with the procedure shown for example in Fig.1.

That is, Fig.1 shows processing contents of an application, executed on a personal computer, by a routine 200. When a user commands to boot this application, the processing on the personal computer commences at a step 201 of the routine 200. Then, in a step 202, the principal portion (core part) of the application, as commanded by the user, is booted and, in the next step 203, the processing of the principal portion of the application is executed.

If, during execution of the principal portion of the application, in the step 203, the network is to be in use, processing transfers to a step 204 to check the state of the network. If, as a result of this check, the network is in the normal state, processing transfers to a step 205 where data is accessed using the network. Then, processing reverts to the step 203 to execute the corresponding processing.

If, as a result of the checking in the step 204, the network is in an abnormal state, processing transfers to a step 206 where the abnormal state of the network is demonstrated on a display. Then, processing reverts to the step 203.

That is, in the routine 200, the network is checked, when it is time to use the network, as to whether it is in a normal state or in an abnormal state, and processing corresponding to the result of the check is executed.

A method for confirming whether or not an electronic apparatus, connected to the network, is actually in an operable state, has also been proposed in the Japanese Laid-Open Patent Publication 2001-358730.

Meanwhile, a network may fall into disorder under a situation which may roughly be classified into the following two cases:

The first case is such a one where an own apparatus is in disorder, such as when a LAN (Local Area Network) cable has become plugged off or otherwise malfunctioning, or a LAN board is in an abnormal state. This case is such a one where the cause of the disorder is within the sphere controllable by the user.

The second case is such a one where e.g. an external apparatus, other than the own apparatus, is in disorder, such as when a DNS (Domain Name System) server is malfunctioning or when the traffic is crowded. This case is such a one where the cause of the disorder is outside the sphere controllable by the user.

However, from the perspective of an OS (Operating System) or an application, it is not possible to distinguish the case where the cause of the disorder is located in the own apparatus from the case where the cause of the disorder is located in an external apparatus other than the own apparatus. Moreover, in case the DNS server, as an external apparatus, falls into disorder, waiting for timeout of 75 to 80 seconds is produced.

Hence, when accidental plug-off of the LAN cable of the own apparatus has occurred during use of the network, or when such plug-off has occurred as from the time prior to the use of the network, it is necessary to wait for a time-out period of 75 to 80 seconds before proceeding from the step 204 to the step 206. During this timeout period, the system ceases to respond to the user's request. The user becomes aware of occurrence of an unusual state, after the timeout period, by the step 206.

In short, even if the network has become unusable from the grounds attributable to the own apparatus, this cannot be comprehended readily. Additionally, even the fact that the own apparatus is responsible for the failure cannot be comprehended.

### Disclosure of the Invention

It is an object of the present invention to provide a novel management method for network connection, whereby the problem inherent in the above-described conventional technique may be resolved, and an electronic apparatus.

It is another object of the present invention to provide a novel management method for network connection, whereby, in case of occurrence of an abnormal status in the use of a network, it is possible to demarcate the case in which the abnormal status is attributable to the own apparatus from the case in which the abnormal status is attributable to external apparatus different from the own apparatus, and an electronic apparatus.

It is yet another object of the present invention to provide a novel management method for network connection, whereby an abnormal situation attributable to the own apparatus is readily apprised to a user, and an electronic apparatus.

For accomplishing the above object, the present invention provides a method for management for connection to a network in which, as an electronic apparatus, such an apparatus including an access controller for detecting the connection or the non-connection to a network cable and a micro-computer, is used. The method comprises carrying out, in executing an application, a first check as to whether or not there is any malfunction pertinent to the network connection, by detecting the state of electrical connection of the network cable, responsive to a detection output of the access controller, while carrying out a second check, by the access controller, as to whether or not the linkage to the network is normal, if, as a result of the first check, there is no malfunction pertinent to the network connection, and carrying out accessing of the application to the network if, as a result of the second check, the accessing of the application to the network is executed.

In the method for management for connection to a network according to the present invention, if, as a result of the first check, there is malfunction in the network connection, this fact is displayed, and if, as a result of the second check, there is malfunction in a linkage to the network, this fact is displayed.

Preferably, the application carries out the first and second checks at a preset time interval.

The present invention also provides an electronic apparatus comprising a connector jack for connection to a network cable, an access controller for detecting the connection or non-connection of the network cable to the connector jack, and a micro-computer. The micro-computer carries out, in executing an application, a first check as to whether or not there is any malfunction pertinent to the network connection, by detecting the state of electrical connection of the network cable, responsive to a detection output of the access controller, while carrying out a second check, by the access controller, as to whether or not the linkage to the network is normal, if, as a result of the first check, there is no malfunction pertinent to the network connection, and carrying out accessing of the application to the network if, as a result of the second check, the accessing of the application to the network is executed.

In the electronic apparatus according to the present invention, if, as a result of the first check, there is malfunction in the network connection, this fact is displayed, and wherein, if, as a result of the second check, there is malfunction in a linkage to the network, this fact is displayed. The micro-computer in the electronic apparatus carries out the first and second checks at a preset time interval.

Other objects and advantages of the present invention will become more apparent from the following explanation of preferred embodiments thereof especially when read in conjunction with the drawings.

### Brief Description of the Drawings

Fig.1 is a flowchart showing a routine of processing contents of an application run on a personal computer.
Fig.2 is a block diagram showing the state of connection of an AV (audio visual) apparatus, as an electronic apparatus, to a communication network.
Fig.3 is a flowchart showing the sequence of processing operations of a personal computer when a user has given a command for booting an optional application.
Fig.4 is a flowchart showing the sequence of processing operations of a personal computer when a command is given for booting an application accessing the network only once for each booting, as in a software item for transmitting/receiving an E-mail.

### Best Mode for Carrying out the Invention

Referring to the drawings, the management method for network connection, and the electronic apparatus, according to the present invention, will now be explained.

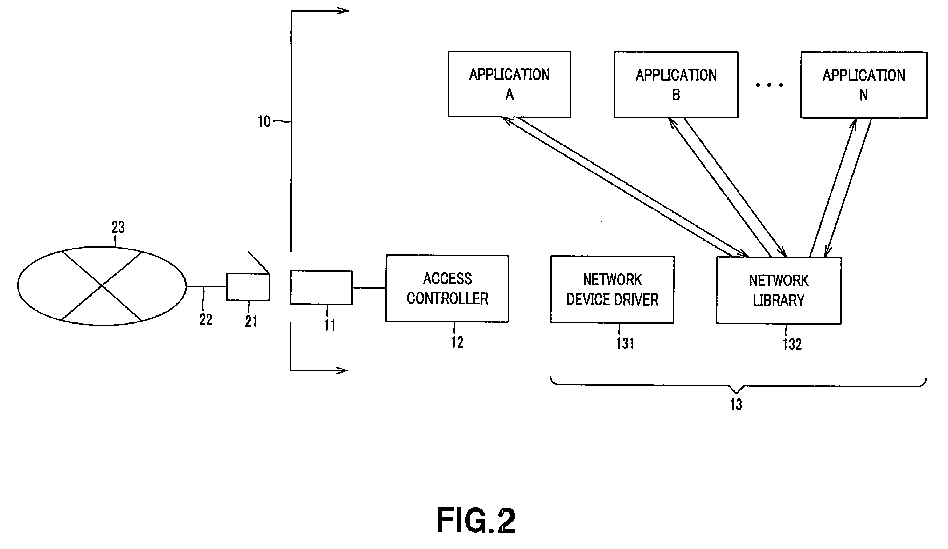

According to the present invention, an AV (audio visual) apparatus 10, as an electronic apparatus, is connected to a communication network 23, as shown in Fig.2.

The AV apparatus 10 has Linux (registered trademark) installed thereon as an OS (operating system), and is connected to the communication network 23 over a connector plug 21 of Ethernet (registered trademark) and a LAN (Local Area Network) cable 22.

It is noted that the AV apparatus 10 forms a hardware item of the present invention, and includes a connector jack 11 for Ethernet (registered trademark), an access controller 12, and a micro-computer 13 for system control. In this case, a connector plug 21 is plugged into the connector jack 11, such that the AV apparatus 10 is connected over the LAN cable 22 to the network 23.

The access controller 12 is connected across the connector jack 11 and the micro-computer 13 to carry out link processing with respect to the network 23 or processing needed for data access, under control by a network device driver as later explained. The access controller 12 also has the function of detecting the electrical connection to the network 23 and of notifying the micro-computer 13 of a change in the status of the electrical connection by a hardware interrupt when such change has occurred.

That is, when the connector plug 21 is correctly plugged into the connector jack 11, the potential at a predetermined contact of the connector jack 11 is changed. This change in the potential is detected by the access controller 12. On detection of the change in the potential, the access controller 12 applies a hardware interrupt to the micro-computer 13 to notify the micro-computer 13 of the fact of connection of the LAN cable 22 to the apparatus. It is noted that, in case the connector plug is not plugged into the connector jack, the interrupt by the access controller 12 is not executed.

If the connector plug 21 is plugged off from the state in which it is correctly plugged into the connector jack 11, the potential at a predetermined contact of the connector jack 11 is changed. The access controller 12 detects this change in the potential to apply the hardware interrupt to the micro-computer 13 to notify the micro-computer 13 of the fact of plug-off of the connector plug 21. Hence, the micro-computer 13 is apprized of the plug-in and plug-off of the connector plug 21, connected to the LAN cable 22, by the hardware interrupt by the access controller 12.

The access controller 12, having the above-described function, may be exemplified by IC[DP83815], manufactured by the National Semiconductor Cooperation, to distinct outer pins of which are allocated a signal relevant to data access and a signal relevant to the connection state and to the hardware interrupt.

The micro-computer 13 includes, as part of the software it runs, a network device driver 131 and a network library 132. The role of the network device driver 131 is to control the access controller 12 to enable the data access to the network 23. The network device driver 131 also processes the interrupt signal from the access controller 12. The network library 132 is an ensemble of a variety of basic programs for making use of the network.

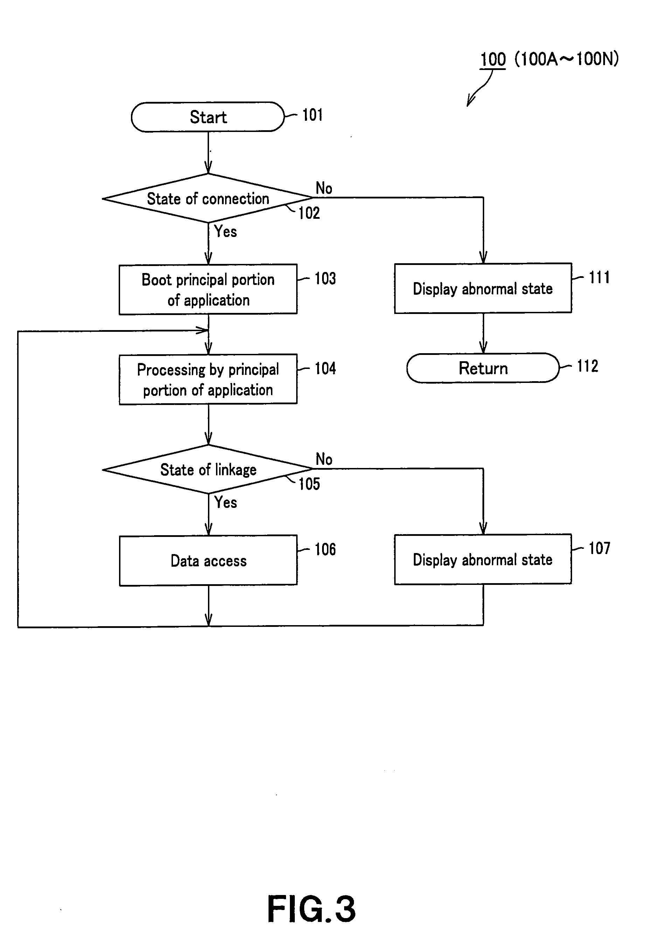

A plural number of applications A to N, necessary or useful in employing this AV apparatus 10, are provided for the micro-computer 13. These applications A to N execute plural routines 100 (routines 100A to 100N) shown in Fig.3.

In the above configuration, if the user instructs e.g. an optional application M to be booted, the processing on the personal computer is started as from a step 101 of the routine 100 forming the so instructed application M (routine 100M). In the next step 102, the personal computer construes the interrupt from the access controller 12 to verify whether or not any unusual situation persists in the own apparatus. That is, the computer verifies whether or not any unusual status has occurred within the sphere of possible management by the user, such as plug-off or failure of the LAN cable or the malfunctioning of the LAN board.

That is, since the state of connection between the connector plug 21 and the connector jack 11 is detected by the access controller 12, and the hardware interrupt to the micro-computer 13 is controlled on the basis of the results of detection, it may be checked, by construing the hardware interrupt in the step 102, whether or not there persists any malfunction attributable to the own apparatus.

If, as a result of the check, it is found that the failure attributable to the own apparatus has not occurred, processing transfers from the step 102 to a step 103, in which step 103 the principal portion of the application, as instructed by the user, is booted. In the next step 104, the processing of the principal portion of the application is carried out.

If, when the processing of the principal portion of the application is being carried out by the step 104, it has come to pass that the network 23 is to be used, processing transfers to the step 105 to check for the state of linkage to the network 23. This check of the state of linkage to the network 23 is carried out to in order to take into consideration that e.g. an external apparatus other than the own apparatus may be malfunctioning, and is designed to cope with the trouble in the sphere uncontrollable by the user. More concretely, this check is carried out by the network device driver 131 controlling the access controller 12. The timeout period of the check is 75 to 80 seconds, as previously specified.

If, as a result of the check, the state of linkage to the network 23 is normal, processing transfers from the step 105 to a step 106, in which step 106 data on the network 23 are accessed via the access controller 12 over LAN cable 22. Processing then reverts to the step 104 to continue the processing on the principal portion of the application.

If, as a result of the check, the state of linkage to the network 23 is not normal, processing transfers from the step 105 to a step 107, in which step 107 a string of characters running: 'The network is not operating as normally and cannot be used' is demonstrated on a display, not shown, and processing for a case the linkage cannot been set up is carried out. Processing then reverts to the step 104.

If, as a result of the check in the step 102, there has been produced failure attributable to the own apparatus, processing transfers from the step 102 to a step 111, in which step 111 e.g. a string of characters running: 'The LAN cable or the apparatus is not operating as normally and hence the network cannot be used' is demonstrated on the display, not shown, and processing for a case the linkage cannot been set up is carried out. Processing then transfers to a step 112 to finish the processing of the routine 100.

Thus, with the above-described AV apparatus 10, it can be comprehended whether the own apparatus is malfunctioning or the external apparatus other than the own apparatus is malfunctioning. In this case, the steps 102 and 105 in the routine 100 monitor the trouble attributable to the own apparatus and the state of linkage to the network 23, respectively, and hence the trouble attributable to the own apparatus and that attributable to the external apparatus other than the own apparatus may be separated from each other, in giving a judgment, so that it becomes easier to take appropriate measures against occurrence of malfunctions. For example, it may readily be comprehended that the LAN cable 22 or the connector plug 21 connected to the LAN cable 22 has become plugged off, or a straight cable is mistaken for a cross-cable or vice versa in using the LAN cable 22.

Moreover, in carrying out the routine 100, the step 102 first checks for possible troubles on the part of the own apparatus, so that, in case the trouble in question is attributable to the own apparatus, such trouble may immediately be located without waiting for the timeout period of 75 to 80 seconds.

Furthermore, since the access controller 12 is inherently necessary for connection to the network 23, it is unnecessary to add hardware, so that cost may be prevented from rising. Any of the applications A to N may be constructed similarly to the routine 100 such that countermeasures to be taken against malfunctions on the occasion of employing the network may be specified by a set of rules. In addition, the above processing may be realized under Linux (registered trademark) .

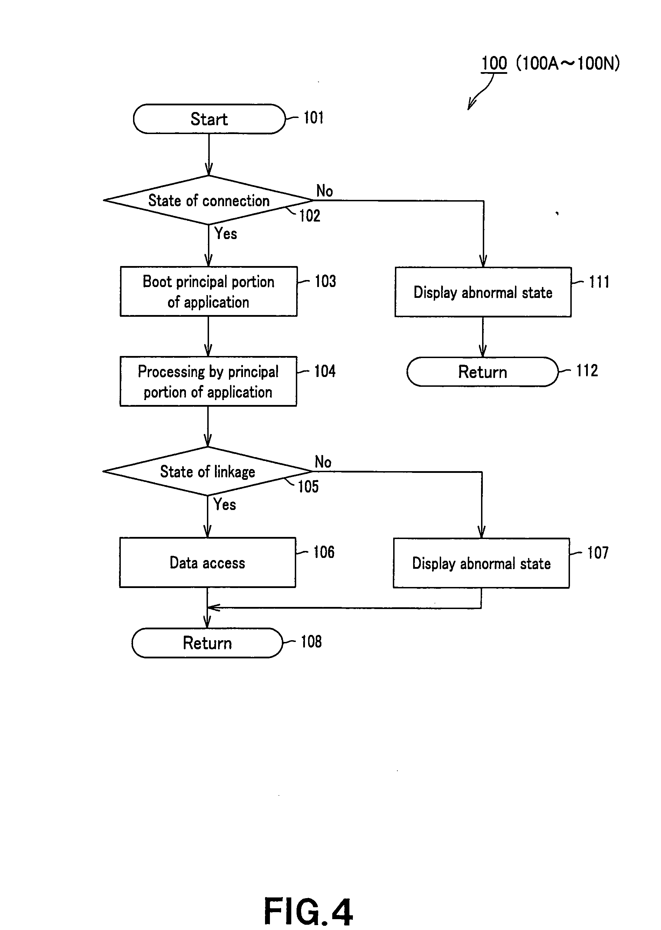

The above-described case refers to a case of an application in which plural access passes to the network 23 may occur when once the application is booted. In the case of an application in which the network 23 is accessed only once each time the application is booted, e.g. a software item for transmitting/ receiving an E-mail, the routine 100 may be constructed as shown in Fig.4.

For example, if setting is made for a personal computer to run a mailer, the mailer is run e.g. once every ten minutes, and accesses the network 23 only once every run event. Thus, in the case of this application, it is sufficient that, when the steps 106, 107 have been executed, the routine 100 is terminated by a step 108, as shown in Fig.4.

In the above example, the malfunction is displayed in the step 111. If such display is not desirable, an error flag may be set in the step 111, after which processing may transfer to a step 103 and subsequently the processing in keeping with the flag may be carried out as necessary.

The present invention is not limited to the above embodiment explained with reference to the drawings and, as will be apparent to those skilled in the art, various changes, substitutions or equivalents may be made by those skilled in the art without departing from the scope of the invention as defined in the claims.

### Industrial Applicability

According to the present invention, described above, when an electronic apparatus is in use as it is connected to a communication network, the malfunction attributable to the electronic apparatus and that attributable to the network may be demarcated from each other, so that, in case a malfunction has occurred, suitable measures may be taken more conveniently. Moreover, in the case of the malfunction attributable to the own apparatus, the malfunction may immediately be located without waiting for a timeout period of 75 to 80 seconds. In addition, cost increase may be prohibited without the necessity of adding the hardware.

## Claims

1. A method for management for connection to a network in which an electronic apparatus including an access controller for detecting the connection or the non-connection to a network cable and a micro-computer is used, said method comprising
carrying out, in executing an application, a first check as to whether or not there is any malfunction pertinent to the network connection, by detecting the state of electrical connection of said network cable, responsive to a detection output of said access controller;
carrying out a second check, by said access controller, as to whether or not the linkage to said network is normal, if, as a result of said first check, there is no malfunction pertinent to the network connection; and
carrying out accessing of said application to said network if, as a result of said second check, the linkage to said network is normal.

2. The method for management for connection to a network according to claim 1 wherein, if, as a result of said first check, there is malfunction in said network connection, this fact is displayed, and wherein, if, as a result of said second check, there is malfunction in a linkage to said network, this fact is displayed.

3. The method for management for connection to a network according to claim 1 wherein said application carries out said first and second checks at a preset time interval.

4. An electronic apparatus comprising
a connector jack for connection to a network cable;
an access controller for detecting the connection or non-connection of said network cable to said connector jack; and
a micro-computer;
said micro-computer carrying out, in executing an application, a first check as to whether or not there is any malfunction pertinent to connection to the network, by detecting the state of electrical connection of said network cable, responsive to a detection output of said access controller;
carrying out a second check, by said access controller, as to whether or not the linkage to said network is normal, if, as a result of said first check, there is no malfunction pertinent to the network connection; and
carrying out accessing of said application to said network if, as a result of said second check, the linkage to said network is normal.

5. The electronic apparatus according to claim 4 wherein, if, as a result of said first check, there is malfunction in the connection to said network, this fact is displayed, and wherein, if, as a result of said second check, the linkage to said network is not normal, this fact is displayed.

6. The electronic apparatus according to claim 4 wherein said micro-computer carries out said first and second checks at a preset time interval.
